# EUROPÄISCHE PATENTANMELDUNG

(11) **EP 4 112 217 A1**
(43) Veröffentlichungstag der Anmeldung: **04.01.2023**
(21) Anmeldenummer: 22180432.1
(22) Anmeldetag: 22.06.2022
(51) Int. Cl.: B23K 9/095, B23K 26/04

(54) **VERFAHREN ZUR THERMISCHEN BEARBEITUNG EINES WERKSTÜCKS MIT EINER THERMISCHEN BEARBEITUNGSMASCHINE**

(30) Priorität: 30.06.2021 DE 102021116899
(71) Anmelder: Messer Cutting Systems GmbH, 64823 Gross-Umstadt (DE)
(72) Erfinder: GÖLLER, Ingo, 64823 Groß-Umstadt (DE); GÖSSWEIN, Hermann, 64823 Groß-Umstadt (DE); DEUTSCH, Nils, 64823 Groß-Umstadt (DE)
(74) Vertreter: Staudt, Armin Walter

(57) **Zusammenfassung**

Bekannte Verfahren zur thermischen Bearbeitung eines Werkstücks verwenden eine thermische Bearbeitungsmaschine, die ein mittels einer CNC-Regelung und einer Abstandsregelung relativ zum Werkstück verfahrbares Bearbeitungswerkzeug und einen damit verfahrbaren Abstandssensor aufweist. Um hiervon ausgehend ein Verfahren anzugeben, das eine thermische Bearbeitung des Werkstücks mit möglichst hoher und gleichbleibender Qualität ermöglicht und dennoch einfach, schnell und kostengünstig durchführbar ist, wird erfindungsgemäß vorgeschlagen, dass die folgenden Verfahrensschritte vollautomatisiert durchgeführt werden:
(a) Einrichten der Bearbeitungsmaschine durch Erzeugen eines Kontakts zwischen Bearbeitungswerkzeug und Werkstück und Erfassen der räumlichen Lage einer Werkstück-Oberfläche, Positionieren des Bearbeitungswerkzeugs in einem vorgegebenen ersten und zweiten Abstand zur Werkstück-Oberfläche und Erfassen der zugehörigen Signalwerte des Abstandssensors als ersten und zweiten Messwert, sowie Kalibrieren der Abstandsregelung umfassend das Bestimmen einer Höhenableitung des Abstandssensor-Signals und eines Verstärkungsfaktors für das Signal des Abstandssensors unter Berücksichtigung des ersten Messwerts, des zweiten Messwerts, des ersten Abstands und des zweiten Abstands,
(b) Positionieren des Bearbeitungswerkzeugs in einem vorgegebenen Arbeitsabstand zur Werkstück-Oberfläche unter Einbeziehung des Verstärkungsfaktors, und
(c) thermisches Bearbeiten des Werkstücks.

## Beschreibung

### Technisches Gebiet

Die vorliegende Erfindung betrifft ein Verfahren zur thermischen Bearbeitung eines Werkstücks mit einer thermischen Bearbeitungsmaschine, die ein mittels einer CNC-Regelung und zur Feinabstimmung mittels einer Abstandsregelung relativ zum Werkstück verfahrbares Bearbeitungswerkzeug und einen mit dem Bearbeitungswerkzeug verfahrbaren Abstandssensor aufweist.

Das erfindungsgemäße Verfahren ist insbesondere zur thermischen Bearbeitung eines metallischen, vorzugsweise ferromagnetischen, Werkstücks einsetzbar. Der Begriff "thermische Bearbeitung" umfasst das Schweißen, Schneiden oder Markieren des Werkstücks. Thermische Schweißverfahren sind beispielsweise das Gasschmelzschweißen, das Lichtbogenschweißen, das Schutzgasschweißen, das Elektronenstrahlschweißen und das Laserschweißen. Zu den thermischen Trennverfahren gehören beispielsweise das Plasma-Schmelzschneiden, das autogene Brennschneiden und das Laserschneiden.

Eine "thermische Bearbeitungsmaschine" ist zur thermischen Bearbeitung eines Werkstücks ausgelegt. Der Begriff umfasst Schneid- und Schweißmaschinen. Eine thermische Bearbeitungsmaschine hat ein "Bearbeitungswerkzeug" für die thermische Bearbeitung des Werkstücks. Bearbeitungswerkzeuge in diesem Sinne sind beispielsweise die Fokussieroptik einer Laserschneid- oder Laserschweißmaschine, aber auch Plasma- beziehungsweise Autogen-Schweiß- oder Schneidbrenner. Das Bearbeitungswerkzeug ist mittels einer Maschinensteuerung - im Folgenden auch bezeichnet als "CNC-Regelung" - computergestützt in einem vorgegebenen Raum verfahrbar und darin vollautomatisch positionierbar. Vorzugsweise nutzt die CNC-Regelung zur Positionserfassung des Bearbeitungswerkzeugs einen Encoder, mit dem die Ist-Werte der Positionskoordinaten des Bearbeitungswerkzeugs erfassbar sind. Anschließend ermittelt und korrigiert die CNC-Regelung Abweichungen der Ist-Position des Bearbeitungswerkzeugs zu seiner Soll-Position.

Eine "Abstandsregelung" im Sinne der Erfindung ist eine Regelung der Position des Bearbeitungswerkzeugs zu dem Zweck, den Abstand des Bearbeitungswerkzeugs zu einer Werkstück-Oberfläche möglichst präzise auf einen vorgegebenen Abstandswert einzustellen. Hierdurch kann eine durch die CNC-Regelung vorgegebene räumliche Position des Bearbeitungswerkzeugs in xyz-Richtung im Hinblick auf die Einstellung eines vorgegebenen Abstands in z-Richtung präzisiert werden. Insbesondere ist es möglich, das Bearbeitungswerkzeug so in einem möglichst gleichbleibenden Abstand relativ zur Werkstück-Oberfläche zu bewegen.

Eine solche Abstandsregelung setzt einen Abstandssensor voraus, mit dem die Ist-Position des Bearbeitungswerkzeugs relativ zur Werkstückoberfläche ermittelbar ist. Der Begriff "Abstandssensor" bezeichnet einen Sensor, dessen Messsignal mit dem Abstand des Bearbeitungswerkzeugs zum Werkstück korreliert oder korrelierbar ist.

### Stand der Technik

Bekannte Verfahren zur thermischen Bearbeitung eines Werkstücks lassen sich sowohl im Hinblick auf das gewünschte Bearbeitungsergebnis, also die Bearbeitungsqualität, aber auch im Hinblick auf die hierfür benötigte Bearbeitungsdauer optimieren. Grundsätzlich ist aber eine möglichst gleichbleibend hohe Bearbeitungsqualität bei möglichst kurzer Bearbeitungsdauer wünschenswert.

Insbesondere die möglichst präzise Einhaltung eines zuvor ermittelten (optimierten) Arbeitsabstands zwischen dem Bearbeitungswerkzeug und dem Werkstück hat einen wesentlichen Einfluss auf das Bearbeitungsergebnis. Zu diesem Zweck weisen bekannte thermische Bearbeitungsmaschinen standardmäßig eine Abstandsregelung auf, über die der Abstand zwischen Bearbeitungswerkzeug und Werkstück auf den Arbeitsabstand geregelt werden kann. Es sind verschiedene Abstandsregelungen bekannt, die beispielsweise induktiv, optisch oder kapazitiv arbeiten.

So beschreiben beispielsweise die EP 1 498 209 A2 und die DE 103 32 422 A1 eine induktive Abstandsregelung. Diese basiert auf der Erzeugung eines Magnetfelds im Bereich des Brennerkopfes mittels einer den Brennerkopf umgebenden Erregerspule und der Erfassung des Magnetfelds mit mindestens zwei Messelementen, die ebenfalls den Brennerkopf umgeben und ein Messsignal in Form eines elektrischen Wechselfelds erzeugen. Für die Regelung des Arbeitsabstands wird die Phasenlage der Messignale beider Messelemente ausgewertet.

Eine exakte Prozessführung ist mit einer Abstandregelung aber nur erreichbar, wenn die Bearbeitungsmaschine korrekt eingerichtet und kalibriert ist. Das Einrichten der Bearbeitungsmaschine erfolgt regelmäßig manuell und ist daher zeit-, arbeits- und kostenintensiv.

Häufig umfasst das Einrichten der Bearbeitungsmaschine mehrere Verfahrensschritte, insbesondere eine "Erstwertfindung" und das Kalibrieren des Abstandsregelung. Bei der "Erstwertfindung" wird das Bearbeitungswerkzeug manuell in Richtung der Werkstück-Oberfläche bewegt und derart positioniert, dass das Bearbeitungswerkzeug mit der zu bearbeitenden Oberfläche des Werkstücks in Kontakt gebracht wird. Auf diese Weise wird die räumliche Lage eines Punkts der Werkstück-Oberfläche ermittelt. Der so ermittelte Punkt ist der Ausgangspunkt für eine Positionierung des Bearbeitungswerkzeugs relativ zur Werkstückoberfläche. Ein geeignetes Verfahren zur "Erstwertfindung" ist beispielsweise in der DE 10 2014 101 719 A1 beschrieben.

Zum Kalibrieren der Abstandsregelung wird die Höhenposition des Bearbeitungswerkzeugs über dem Werkstück mit einem Unterlegwerkzeug eingestellt. Ein geeignetes Unterlegwerkzeug ist beispielsweise ein Keil mit Stufen bekannter Stufenhöhe, mit dem verschiedene Abstände zwischen Bearbeitungswerkzeug und Werkstück einstellbar sind. Nach einer manuellen Feineinstellung wird eine Führungsgröße für die Abstandsregelung ermittelt. Da die Kalibrierung fehlerbehaftet sein kann oder sich ergebnisrelevante Umgebungsparater im Laufe der Zeit verändern können, ist regelmäßig eine Überprüfung der ordnungsgemäßen Funktion der Abstandsregelung notwendig, bei der getestet wird, ob das Unterlegwerkzeug auch nach einer Einstellung des Abstands mit der Abstandsregelung gerade so zwischen Bearbeitungswerkzeug und Werkstück passt. Gegebenenfalls kann eine erneute Feineinstellung notwendig sein. Hat eine Bearbeitungsmaschine mehrere Bearbeitungswerkzeuge müssen die zuvor beschriebenen Einrichtungsschritte für jedes Bearbeitungswerkzeug gesondert ausgeführt werden. Nachteilig erweist sich hieran der hohe Zeit- und Arbeitsaufwand einer manuellen Kalibrierung, der aufgrund der damit verbundenen Prozessunterbrechungen und Stillstandzeiten auch kostenintensiv ist.

### Technische Aufgabenstellung

Der vorliegenden Erfindung liegt daher die Aufgabe zugrunde, ein Verfahren anzugeben, das eine thermische Bearbeitung eines Werkstücks mit möglichst hoher und gleichbleibender Qualität ermöglicht und dennoch einfach, schnell und kostengünstig durchführbar ist.

### Zusammenfassung der Erfindung

Gelöst wird diese Aufgabe durch ein Verfahren zur thermischen Bearbeitung eines Werkstücks mit einer thermischen Bearbeitungsmaschine mit den Merkmalen des Patentanspruchs 1.

Der vorliegenden Erfindung liegt die Idee zugrunde, das thermische Bearbeiten eines Werkstücks zu vereinfachen und Prozessstillstandzeiten zu verringern, indem die Verfahrensschritte vom Einrichten der Bearbeitungsmaschine bis hin zum thermischen Bearbeiten des Werkstücks vollautomatisiert durchgeführt werden. Eine Grundlage hierfür bildet die CNC-Regelung der Bearbeitungsmaschine, die erfindungsgemäß sowohl zur Erstwertfindung als auch zur Kalibrierung der Abstandsregelung genutzt wird. Diese ist ohnehin vorhanden und hat den Vorteil, dass sie vorab, also unabhängig vom Werkstück, kalibrierbar ist. Eine erfolgte Kalibrierung der CNC-Regelung kann daher für eine Mehrzahl von Werkstücken verwendet werden. Mittels der vorab kalibrierten CNC-Regelung kann das Bearbeitungswerkzeug mit hoher Genauigkeit in einem vorgegebenen Raum, also in x-, y- und z-Richtung positioniert werden.

Das Einrichten der Bearbeitungsmaschine beginnt erfindungsgemäß mit der automatisierten "Erstwertfindung", bei der das Bearbeitungswerkzeug mittels der CNC-Regelung vorsichtig in Richtung der Werkstück-Oberfläche bewegt wird, und zwar so lange bis das Bearbeitungswerkzeug die Werkstück-Oberfläche berührt. Für die Bewegung des Bearbeitungswerkzeugs wird die kalibrierte CNC-Regelung der Bearbeitungsmaschine genutzt. Meist dürfte die Lage des Werkstücks im Raum und damit die Bewegungsrichtung (beispielsweise in z-Richtung) des Bearbeitungswerkzeugs bei der Erstwertfindung bereits durch die Anordnung des Werkstücks relativ zur Bearbeitungsmaschine, also durch die die Bearbeitungsmaschine selbst, zumindest grob vorgebeben sein, beispielsweise anhand einer vorhandenen Auflagefläche für das Werkstück oder einer anderen Begrenzungsfläche der Bearbeitungsmaschine. Ansonsten ist aber auch die Vorgabe der Bewegungsrichtung durch den Bediener denkbar. Die Bewegung des Bearbeitungswerkzeugs erfolgt mit einer Geschwindigkeit, bei der weder das Bearbeitungswerkzeug noch das Werkstück durch die beiderseitige Berührung beschädigt werden können. Vorzugsweise erfolgt das Erzeugen des Kontakts zwischen Bearbeitungswerkzeug und Werkstück durch vorsichtiges Absenken des Bearbeitungswerkzeugs mittels der CNC-Regelung. Vorzugsweise wird der Kontakt zwischen Bearbeitungswerkzeug und Werkstück daran erkannt, dass durch den Kontakt ein Stromkreis geschlossen wird. Sobald ein Kontakt erkannt ist, wird die Bewegung des Bearbeitungswerkzeugs Richtung der Werkstück-Oberfläche vollautomatisiert gestoppt, um eine Beschädigung des Bearbeitungswerkzeugs, aber auch des Werkstücks zu verhindern. Auf diese Weise wird die räumliche Lage eines ersten Punktes der Werkstück-Oberfläche ermittelt. Der so ermittelte Punkt ist der Ausgangspunkt für die nachfolgende Positionierung des Bearbeitungswerkzeugs relativ zur Werkstückoberfläche.

Das Abstandssensor-Signal ist regelmäßig von einer Vielzahl von Faktoren abhängig, von denen hier nur beispielsweise der Werkstoff, aus dem das Werkstück gefertigt ist, die Werkstückgeometrie, insbesondere die Werkstückdicke, aber auch die Umgebungsbedingungen, wie die Temperatur, genannt seien. Eine exakte Abstandsbestimmung unter Einsatz des Abstandssensors setzt dessen Höhen-Kalibrierung voraus. In einem zweiten Verfahrensschritt ist daher erfindungsgemäß vorgesehen, dass das Bearbeitungswerkzeug in einem vorgegebenen ersten Abstand zur Werkstück-Oberfläche positioniert und der zugehörige Signalwert des Abstandssensors als erster Messwert erfasst wird. Zum Positionieren wird das Bearbeitungswerkzeug mittels der CNC-Regelung vorzugsweise senkrecht zur Werkstückoberfläche bewegt, also parallel zur Flächennormalen der Werkstück-Oberfläche. Dies entspricht einer Bewegung in z-Richtung, wenn sich die Werkstück-Oberfläche in x- und y-Richtung erstreckt. Anschließend wird das Bearbeitungswerkzeug mittels der CNC-Regelung mindestens in einem vom ersten Abstand verschiedenen zweiten Abstand zur Werkstück-Oberfläche positioniert und der zugehörige Signalwert des Abstandssensors als zweiter Signalwert erfasst.

Zur Kalibrierung der Abstandsregelung wird anschließend anhand der erfassten Signalwerte eine Höhenableitung des Abstandssensor-Signals bestimmt. Im einfachsten Fall erfolgt die Bestimmung der Höhenableitung anhand zweier Messpunkte, wobei der erste Messpunkt aus dem ersten Abstand und dem ersten Messwert, und der zweite Messpunkt aus dem zweiten Abstand und dem zweiten Messwert gebildet werden. In diesem Fall entspricht die Höhenableitung der Steigung einer Geraden durch den ersten und den zweiten Messpunkt.

Abstandssensoren haben regelmäßig einen vorgegebenen Messbereich. Dabei hängt die Definition des Messbereichs davon ab, welche Anforderungen an die Genauigkeit des Abstandssensors gestellt werden. Es hat sich bewährt, wenn Messabweichungen des Abstandssensors von maximal 5%, vorzugsweise maximal 1%, zugelassen werden. Im Messbereich bleiben die Messabweichungen (Messfehler) des Abstandssensors innerhalb der vorgegebenen Grenzen. Allerdings kann der vorgegebene Messbereich im jeweiligen Anwendungsfall in Abhängigkeit von den herrschenden Prozessbedingungen (Temperatur, Atmosphäre, Druck, Werkstückeigenschaften) mehr oder weniger gut auf die tatsächlich gemessenen Signalwerte abgestimmt sein. Zur Genauigkeit der Abstandsregelung trägt aber bei, wenn der Messbereich des Abstandssensors möglichst ausgeschöpft wird. Insbesondere kleine Abstände zwischen Bearbeitungswerkzeug und Werkstück von beispielsweise im Bereich von 2 bis 15 mm sollten zu einem Signalwert führen, der innerhalb des optimalen Messbereichs des Abstandssensors liegt. Nur so lässt sich das Bearbeitungswerkzeug im Nahbereich zum Werkstück präzise positionieren und bewegen. Dies lässt sich meist nur erreichen, indem das Abstandssensor-Signal verstärkt wird. Erfindungsgemäß ist daher vorgesehen, dass anhand des ersten Messwerts, des zweiten Messwerts, des ersten Abstands und des zweiten Abstands, ein Verstärkungsfaktor für das Abstandssensor-Signal ermittelt wird. Der Verstärkungsfaktor lässt sich beispielsweise ermitteln, indem anhand einer durch den ersten Messwert und den zweiten Messwert, den ersten Abstand und den zweiten Abstand bestimmten Kalibrierkurve die Verstärkung des Abstandssensor-Signals analysiert und schließlich verändert wird, um eine entsprechende Steigung einzustellen und so die Reaktion auf Störgrößen zu optimieren. Idealerweise entspricht der Verstärkungsfaktor der Verstärkung, bei der der dem Arbeitsabstand zugehörige Signalwert des Abstandssensors im Bereich von -0,25 V bis 0,25 V liegt. Der Verstärkungsfaktor kann größer oder kleiner als 1 sein oder er beträgt 1, wenn keine Verstärkung des Abstandssensor-Signals benötigt wird. Vorteilhafterweise wird das Signal des Abstandssensors beim thermischen Bearbeiten des Werkstücks gemäß Verfahrensschritt (c) mit dem Verstärkungsfaktor verstärkt. Dies setzt allerdings eine Berücksichtigung des Verstärkungsfaktors bei der Kalibrierung der Abstandsregelung voraus, insbesondere bei der Bestimmung der Höhenableitung des Abstandssensor-Signals.

Danach wird das Bearbeitungswerkzeugs in einem vorgegebenen Arbeitsabstand zur Werkstück-Oberfläche positioniert. Das Positionieren erfolgt unter Einbeziehung des Verstärkungsfaktors mittels der kalibrierten Abstandsregelung. Schließlich folgt das eigentliche thermische Bearbeiten des Werkstücks. Beim thermischen Bearbeiten des Werkstücks kommt entweder ausschließlich die Abstandsregelung zum Einsatz oder es kommt zu einem Zusammenspiel von Abstandsregelung und CNC-Regelung. Im einfachsten Fall wird beim thermischen Bearbeiten des Werkstücks gemäß Verfahrensschritt (c) der Abstand des Bearbeitungswerkzeugs zur Werkstück-Oberfläche mit der Abstandsregelung auf Arbeitsabstand gehalten, wobei die Regelgröße das verstärkte Signal des Abstandssensors ist. Vorzugsweise wird der mit dem Verstärkungsfaktor multiplizierte Führungs-Messwert als Führungsgröße für die Abstandsregelung verwendet. Vorteilhafterweise korrigiert die Abstandsregelung einen durch die CNC-Regelung vorgegebenen Bewegungsverlauf für das Bearbeitungswerkzeug. Denn mit der Abstandsregelung lassen sich Abweichungen in der Werkstückgeometrie oder der Werkstücklage präzise erkennen. Hierdurch ist die Einhaltung des Arbeitsabstands gewährleistet. Dies trägt zu einem guten und präzisen Bearbeitungsergebnis bei. Gleichzeitig werden durch die vollautomatisierte Abfolge der Verfahrensschritte Stillstandzeiten verringert.

Besonders vorteilhaft erweist sich das erfindungsgemäße Verfahren bei großen Rohmaterialplatten mit einer Länge und/oder einer Breite vom beispielsweise mehr als 100 cm. Dies liegt daran, dass sich Messfehler bei der punktbezogenen Erstwertfindung umso stärker auswirken, je weiter entfernt das Bearbeitungswerkzeug von der gemäß Verfahrensschritt (aa) erfassten räumlichen Lage des ersten Punkts auf der Werkstück-Oberfläche positioniert werden soll, oder bei langen Prozessdauern, während der sich die für die Abstandsregelung relevanten Umgebungsparameter, insbesondere die Luftfeuchtigkeit und die Temperatur, nennenswert verändern können. Dieses Problem tritt vor allem auf, wenn das zu bearbeitende Werkstück nicht in einem Zug, sondern mehrfach an separaten, voneinander beabstandeten Stellen auf der Werkstück-Oberfläche thermisch bearbeitet werden soll, beispielsweise, weil aus demselben Werkstück mehrere Formkörper gefertigt werden sollen oder mehrere, räumlich voneinander beabstandete Schweißnähte erzeugt werden müssen. In diesen Fällen ist es möglich, die erfindungsgemäßen Verfahrensschritte (aa) bis (dd) vor einem zweiten Positionieren des Bearbeitungswerkzeugs relativ zu demselben Werkstück und einem zweiten thermischen Bearbeiten desselben Werkstücks entsprechend den Verfahrensschritten (b) und (c) erneut durchzuführen. Dadurch, dass die Verfahrensschritte (a) bis (c) erfindungsgemäß automatisiert durchgeführt werden, ist der damit einhergehende Zeitverlust gering. Andererseits trägt aber ein derartiges Vorgehen zu einer besonders hohen Bearbeitungsqualität bei.

Bei einer bevorzugten Ausgestaltung des erfindungsgemäßen Verfahrens umfasst das Einrichten der Bearbeitungsmaschine gemäß Verfahrensschritt (a) das Positionieren des Bearbeitungswerkzeugs im Arbeitsabstand zur Werkstück-Oberfläche und das Erfassen des zugehörigen Signalwerts des Abstandssensors als Führungs-Messwert für die Abstandsregelung.

Im Hinblick auf das spätere thermische Bearbeiten des Werkstücks, bei dem das Bearbeitungswerkzeug in einem vorgegebenen Arbeitsabstand zur Werkstück-Oberfläche positioniert oder bewegt wird, ist eine genaue Kalibrierung der Abstandsregelung im Bereich des Arbeitsabstands wünschenswert. Es hat sich daher bewährt, das Bearbeitungswerkzeug bereits beim Einrichten der Bearbeitungsmaschine im späteren Arbeitsabstand zur Werkstück-Oberfläche zu positionieren und den entsprechenden Signalwert des Abstandssensors zu erfassen. Einerseits kann der so erfasste Signalwert - gegebenenfalls nach Multiplikation mit dem Verstärkungsfaktor - beim Kalibrieren der Abstandsregelung gemäß Verfahrensschritt (dd) berücksichtigt werden. Andererseits kann er - gegebenenfalls nach Multiplikation mit dem Verstärkungsfaktor - unmittelbar als Führungsgröße für die Abstandsregelung verwendet werden. Der im Arbeitsabstand zur Werkstück-Oberfläche erfasste Messwert wird daher hier auch als Führungs-Messwert für die Abstandsregelung bezeichnet. Im einfachsten Fall ist der erste Abstand oder der zweite Abstand der Arbeitsabstand.

Es hat sich als günstig erwiesen, wenn der beim Erzeugen des Kontakts zwischen Bearbeitungswerkzeug und Werkstück gemäß Verfahrensschritt (aa) erfasste Signalwert ein Referenzwert ist, der beim Kalibrieren der Abstandsregelung, insbesondere bei der Bestimmung des Verstärkungsfaktors, gemäß Verfahrensschritt (dd) berücksichtigt wird.

Trägt man die Signalwerte typischer Abstandssensoren in Abhängigkeit vom Abstand in ein Koordinatensystem ein, zeigt sich entweder ein mit dem Abstand des Bearbeitungswerkzeugs vom Werkstück steigender oder ein fallender Signalverlauf. Der beim Erzeugen des Kontakts zwischen Bearbeitungswerkzeug und Werkstück erfasste Signalwert entspricht dem Schnittpunkt des Signalverlaufs mit der Ordinate des Koordinatensystems. Die Lage dieses Schnittpunkts hängt von einer Vielzahl von Faktoren ab, beispielsweise der Werkstückgeometrie oder der Werkstückbeschaffenheit; ihm kommt beim Kalibrieren der Abstandsregelung gemäß Verfahrensschritt (dd) allenfalls eine untergeordnete Bedeutung zu. Für das Bestimmen der Höhenableitung spielt er ohnehin keine Rolle. Das Kalibrieren der Abstandsregelung, insbesondere das Bestimmen des Verstärkungsfaktors, lässt sich vereinfachen, wenn beim Kalibrieren gemäß Verfahrensschritt (dd) der beim Erzeugen des Kontakts zwischen Bearbeitungswerkzeug und Werkstück erfasste Signalwert als Referenzwert berücksichtigt wird, beispielsweise indem er vom ersten Messwert, vom zweiten Messwert und etwaigen weiteren Messwerten subtrahiert wird.

Bei einer vorteilhaften Ausgestaltung des erfindungsgemäßen Verfahrens wird anhand des erzeugten Kontakts zwischen Bearbeitungswerkzeug und Werkstück gemäß Verfahrensschritt (aa) eine Sicherheitsdistanz zum schnellen Positionieren des Bearbeitungswerkzeugs errechnet. Vorteilhafterweise erfolgt das Ermitteln einer Sicherheitsdistanz zur Werkstück-Oberfläche zum schnellen Positionieren des Bearbeitungswerkzeugs unter Berücksichtigung des gemäß Verfahrensschritt (aa) erzeugten Kontakts zwischen Bearbeitungswerkzeug und Werkstück und des vorgegebenen Arbeitsabstands *h_{cut}* zur Werkstück-Oberfläche.

Die thermische Bearbeitungsmaschine weist neben einer CNC-Regelung eine Abstandsregelung auf, über die das Bearbeitungswerkzeug relativ zum Werkstück verfahrbar ist. Während die Abstandsregelung zur langsamen Feinabstimmung der Position des Bearbeitungswerkzeugs relativ zum Werkstück ausgelegt ist, ist mittels der CNC-Regelung ein schnelles Positionieren des Bearbeitungswerkzeugs möglich. Um die Bearbeitungsdauer - insbesondere bei mehreren sukzessiven thermischen Bearbeitungen desselben Werkstücks - möglichst gering zu halten, hat es sich als günstig erwiesen, den Raum, in dem das Bearbeitungswerkzeug für die Bearbeitung verfahren werden kann, in zwei übereinanderliegende Teilräume zu unterteilen, nämlich in einen ersten, oberen Teilraum, in dem das Bearbeitungswerkzeug einen so großen Abstand vom Werkstück aufweist, dass ein schnelles Positionieren des Bearbeitungswerkzeugs allein mit der CNC-Regelung möglich ist und in einen zweiten, unteren Teilraum, in dem aufgrund der Nähe zum Werkstück und der damit einhergehenden Kollisionsgefahr nur ein langsames Positionieren des Bearbeitungswerkzeugs mittels der Abstandsregelung möglich ist. Der erste Teilraum sollte im Hinblick auf kurze Prozesszeiten möglichst groß, der zweite Teilraum aber nicht so klein sein, dass Kollisionsgefahr besteht.

Eine Grenze zwischen beiden Teilräumen lässt sich bestimmen, indem die Lage der Werkstückoberfläche mit einem Sicherheitsabstand beaufschlagt wird. Aus der gemäß Verfahrensschritt (aa) erfassten räumlichen Lage der Werkstück-Oberfläche lässt sich durch Beaufschlagen mit dem Sicherheitsabstand eine Ebene berechnen, die den Raum oberhalb der Werkstückoberfläche in einen dem Werkstück zugewandten und einen dem Werkstück abgewandten Teilraum unterteilt. Diese Ebene entspricht der einzuhaltenden Sicherheitsdistanz. Nur innerhalb des dem Werkstück abgewandten, oberen Teilraums ist eine freie und schnelle Positionierung des Bearbeitungswerkzeugs ausschließlich über die CNC-Regelung der Bearbeitungsmaschine vorgesehen. Die Distanz zwischen der obersten Position der z-Achse bis zur Grenze beider Teilräume wird im Prozess mit maximaler Geschwindigkeit gefahren. Sie wird hier als "Distanz zum schnellen Positionieren" bezeichnet. Beim thermischen Schneiden eines Werkstücks mit einem Bearbeitungswerkzeug (z.B. Plasmabrenner oder Laser) setzt sich der Sicherheitsabstand vorzugsweise aus der Lochstechhöhe und einem Sicherheitszuschlag zusammen. Die Lochstechhöhe ist der Abstand des Bearbeitungswerkzeugs zur Werkstückoberfläche, bei dem das thermische Bearbeiten des Werkstücks gemäß Verfahrensschritt (c) durch Starten des Bearbeitungswerkzeug begonnen wird. Die Lochstechhöhe liegt dabei vorteilhafterweise im Bereich von 165% bis 185% bezogen auf den Arbeitsabstand. Der Sicherheitszuschlag beträgt vorzugsweise 20 mm bis 50 mm.

Vorteilhafterweise wird zum Erfassen der räumlichen Lage der Werkstück-Oberfläche gemäß Verfahrensschritt (aa) ein zweiter Kontakt zwischen Bearbeitungswerkzeug und Werkstück erzeugt und die räumliche Lage eines zweiten Punkts auf der Werkstück-Oberfläche erfasst.

Es hat sich allerdings besonders bewährt, wenn zum Erfassen der räumlichen Lage der Werkstück-Oberfläche gemäß Verfahrensschritt (aa) zwei weitere Kontakte zwischen Bearbeitungswerkzeug und Werkstück an voneinander beabstandeten Punkten auf der Werkstück-Oberfläche erzeugt werden.

Wenn die Einhaltung des Arbeitsabstands durch die Abstandsregelung gewährleistet ist, genügt für die thermische Bearbeitung eines Werkstücks im einfachsten Fall die Erfassung der räumlichen Lage eines einzigen Punkts auf der Werkstück-Oberfläche als Ausgangspunkt für die Abstandsregelung. Häufig ist es jedoch so, dass das Bearbeitungswerkzeug mehrere thermische Bearbeitungen desselben Werkstücks durchführen soll, wobei es an verschiedenen Punkten auf der Werkstück-Oberfläche ansetzen muss. Durch die Bestimmung eines weiteren beziehungsweise zweier weiterer voneinander beabstandeter Kontakt-Punkte zwischen Bearbeitungswerkzeug und Werkstück lässt sich bei einer ebenen Werkstück-Oberfläche, die Lage der Werkstück-Oberfläche im Raum mit einer hohen Genauigkeit erfassen. Hierdurch ist es möglich, bei einem weiteren Ansatzpunkt für die thermische Bearbeitung auf das Erzeugen eines Kontakts zwischen Bearbeitungswerkzeug gemäß Verfahrensschritt (aa) zu verzichten.

Vorzugsweise erfasst der Abstandssensor die elektrische Kapazität zwischen einer Messelektrode des Abstandssensors und dem Werkstück. Ein kapazitiver Abstandssensor hat den Vorteil einer guten Messgenauigkeit bei gleichzeitig geringer Baugröße. Er ist darüber hinaus kostengünstig.

Alternativ kann der Abstandssensor den Abstand zwischen Werkstück und Bearbeitungswerkzeug aber auch mit einem optischen Verfahren erfassen. Optische Abstandssensoren zeigen - im Gegenteil zu kapazitiven Abstandssensoren - eine hohe Messgenauigkeit auch bei Werkstücken mit Oberflächenbeschädigungen oder anhaftendem Rost.

Im einfachsten Fall lässt sich ein Kontakt zwischen Bearbeitungswerkzeug und Werkstück daran erkennen, dass durch den Kontakt ein Stromkreis geschlossen wird. Alternativ lässt sich ein Kontakt zwischen Bearbeitungswerkzeug und Werkstück aber auch am Feedback eines Antriebsverstärkers (Drehmoment, Strom etc.) oder eines mechanischen Aushebelschalters erkennen. Dies erweist sich vorteilhaft im Hinblick auf den benötigten Bauraum, denn so kann auf einen zusätzlichen Sensor am Bearbeitungswerkzeug beziehungsweise eine elektrisch leitende Ausführung zumindest von Teilen des Bearbeitungswerkzeugs verzichtet werden. Alternativ lässt sich der Kontakt zwischen Bearbeitungswerkzeug und Werkstück bauraumeinsparend aber auch mit Hilfe des Sensorsignals und einer Default-Parametrierung des Regelkreises erkennen.

Vorteilhafterweise erfolgt das Positionieren des Bearbeitungswerkzeugs gemäß Verfahrensschritt (bb) und/oder (cc) anhand eines Bearbeitungsmaschinen-Koordinatensystems, dessen Nullpunkt ein beim Erzeugen des Kontakts zwischen Bearbeitungswerkzeug und Werkstück gemäß Verfahrensschritt (aa) erzeugter Kontaktpunkt ist.

Das Verfahren des Bearbeitungswerkzeugs relativ zum Werkstück setzt ein Bearbeitungsmaschinen-Koordinatensystem voraus. Dabei kann der Nullpunkt des Bearbeitungsmaschinen-Koordinatensystems grundsätzlich ein beliebiger Punkt sein. Es hat sich allerdings als vorteilhaft erweisen, nach dem Erzeugen des Kontakts gemäß Verfahrensschritt (aa) eine Nullpunktverschiebung vorzunehmen, sodass ein beim Erzeugen des Kontakts gemäß Verfahrensschritt (aa) erzeugter Kontaktpunkt den Nullpunkt des Bearbeitungsmaschinen-Koordinatensystems bildet. Der Vorteil einer Nullpunktverschiebung liegt darin, dass die für eine Bewegung des Bearbeitungswerkzeugs relativ zum Werkstück notwendigen Berechnungen vereinfacht werden. Da sich beim Erzeugen des Kontakts das Bearbeitungswerkzeug und das Werkstück in der Regel nicht nur in einem einzigen Punkt, sondern mit einer Kontaktfläche berühren, hat es sich bewährt, einen bestimmten Punkt der Kontaktfläche auszuwählen, der den Nullpunkt bilden soll. Vorzugsweise entspricht der Nullpunkt dem Mittelpunkt der Kontaktfläche. Dies kann beispielsweise der Mittelpunkt einer Düse, die sogenannte Düsenspitze, oder der Punkt auf der Werkstückoberfläche sein, durch den die optische Achse einer Laseroptik verläuft. Vorzugsweise erfolgt das Positionieren des Bearbeitungswerkzeugs gemäß den Verfahrensschritten (bb) und (cc) ausgehend vom Nullpunkt in einer Richtung senkrecht zur Kontaktfläche von Bearbeitungswerkzeug und Werkstück.

Bei einer weiteren vorteilhaften Modifikation des erfindungsgemäßen Verfahrens ist vorgesehen, dass das thermische Bearbeiten des Werkstücks eine erste thermische Bearbeitung und eine von der ersten Bearbeitung unabhängige zweite thermische Bearbeitung desselben Werkstücks umfasst, und dass die Verfahrensschritte (a) bis (b) vor der ersten thermischen Bearbeitung und vor der zweiten thermischen Bearbeitung durchgeführt werden.

Erfindungsgemäß erfolgt das Einrichten der Bearbeitungsmaschine vollautomatisiert. Dies erweist sich als besonders vorteilhaft, wenn ein und dasselbe Werkstück sukzessive mehrfach thermisch bearbeitet werden soll. Denn hierdurch ist es möglich, ohne größere Zeitverzögerungen auch vor jeder weiteren thermischen Bearbeitung desselben Werkstücks das Einrichten der Bearbeitungsmaschine erneut durchzuführen. Beispielsweise kann beim thermischen Trennen nach dem Schneiden einer ersten Schneidkontur zunächst die Bearbeitungsmaschine vollautomatisiert neu eingerichtet werden bevor eine zweite Schneidkontur in dasselbe Werkstück geschnitten wird. Ein solches Vorgehen erhöht zudem die Genauigkeit der zweiten thermischen Bearbeitung, denn bei einer erneuten Einrichtung können beispielsweise die die Kalibrierung beeinflussenden Veränderungen des Abstandssensor-Signals durch die nach der ersten thermischen Bearbeitung geänderte Werkstück-Geometrie und andere Einflussparameter berücksichtigt werden.

Vorzugsweise wird als Bearbeitungswerkzeug ein Plasmabrenner eingesetzt, der einen ferromagnetischen Brennerkopf und mindestens ein am Brennerkopf fixiertes, ferromagnetisches Schneid- oder Schweißwerkzeug aufweist, wobei der Abstandssensor eine Erregerspule zur Erzeugung eines Magnetfelds und zwei Messspulen umfasst, wobei sich die Messspulen und die Erregerspule um den Brennerkopf und das Schneid- und Schweißwerkzeug erstrecken, wobei anhand der relativen Lage zwischen den Phasen der von den Messspulen erfassten Messsignale der Abstand des Plasmabrenners zur Werkstückoberfläche bestimmt wird.

Das erfindungsgemäße Verfahren ist insbesondere zum thermischen Trennen mit einem Plasmabrenner geeignet.

Es hat sich als besonders vorteilhaft erwiesen, wenn als Bearbeitungswerkzeug ein Plasmabrenner und als Abstandssensor ein kapazitiver Sensor eingesetzt wird. Kapazitive Sensoren erfordern nur einen geringen Bauraum, zeigen eine gute Messgenauigkeit und sind darüber hinaus kostengünstig zu fertigen.

Es hat sich als günstig erwiesen, wenn zum Erzeugen des Kontakts zwischen Bearbeitungswerkzeug und Werkstück gemäß Verfahrensschritt (aa) das Bearbeitungswerkzeug mit einer Geschwindigkeit im Bereich von 0,3 m/min bis 30 m/min, vorzugsweise im Bereich von 3 m/min bis 10 m/min, in Richtung des Werkstücks bewegt wird.

Eine Geschwindigkeit im obengenannten Bereich trägt dazu bei, dass weder das Bearbeitungswerkzeug noch das Werkstück beim Erzeugen des Kontakts beschädigt werden. Im einfachsten Fall lässt sich ein Kontakt zwischen Bearbeitungswerkzeug und Werkstück daran erkennen, dass durch den Kontakt ein Stromkreis geschlossen wird. Es hat sich bewährt, wenn die Bewegung des Bearbeitungswerkzeugs gestoppt wird, sobald ein Kontakt erkannt wird.

### Ausführungsbeispiel

Nachfolgend wird das erfindungsgemäße Verfahren anhand von Zeichnungen näher erläutert. Dabei zeigt in schematischer Darstellung:
- **Figur 1**: eine thermische Bearbeitungsmaschine mit einem Bearbeitungswerkzeug, das zum Erzeugen eines Kontakts mit dem Werkstück in Richtung auf das Werkstücks bewegt wird,
- **Figur 2**: die thermische Bearbeitungsmaschine aus Figur 1 im Zeitpunkt des erzeugten Kontakts zwischen Bearbeitungswerkzeug und Werkstück,
- **Figur 3**: die thermische Bearbeitungsmaschine aus Figur 1 beim Positionieren des Bearbeitungswerkzeugs in einem ersten Abstand *h₁* zur Werkstück-Oberfläche,
- **Figur 4**: die thermische Bearbeitungsmaschine aus Figur 1 beim Positionieren des Bearbeitungswerkzeugs in einem zweiten Abstand *h₂* zur Werkstück-Oberfläche, und
- **Figur 5**: die thermische Bearbeitungsmaschine aus Figur 1 mit dem auf Arbeits-abstand *h_{cut}* positionierten Bearbeitungswerkzeug beim thermischen Bearbeiten des Werkstücks.

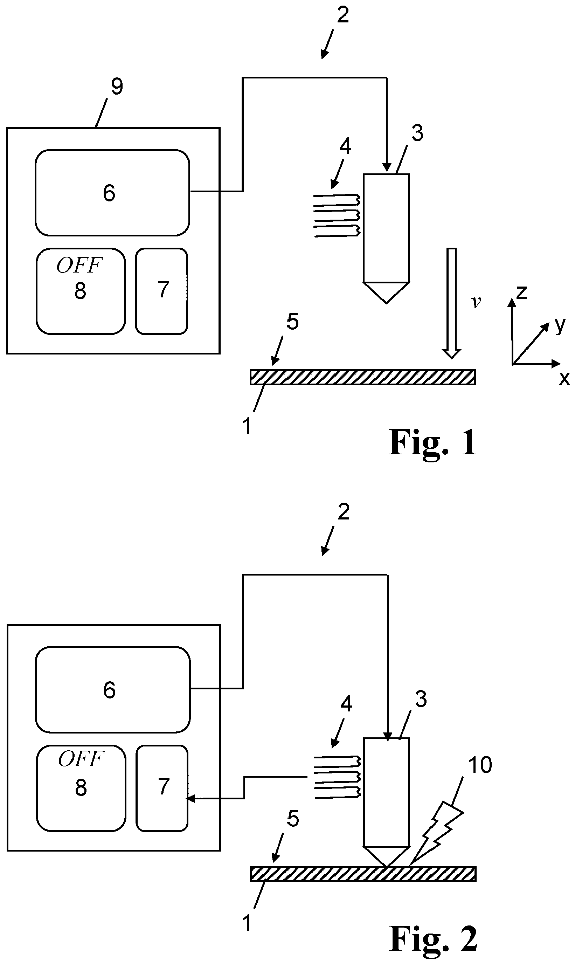

**Figur 1** zeigt eine thermische Bearbeitungsmaschine, der insgesamt die Bezugsziffer 2 zugeordnet ist. Die thermische Bearbeitungsmaschine 2 ist zur thermischen Bearbeitung ferromagnetischer Werkstücke ausgelegt. Beispielhaft zeigt Figur 1 ein Werkstück 1 aus Baustahl S235, das eine Länge von 2.000 mm, eine Breite von 4.000 mm und eine Höhe von 12 mm aufweist. Die thermische Bearbeitungsmaschine 2 umfasst ein Bearbeitungswerkzeug 3 in Form eines Plasmaschneidbrenners, wie er in der EP 1 498 209 A2 beschrieben ist. Der Plasmaschneidbrenner ist mit einem Abstandssensor 4 versehen. Der Abstandssensor 4 ist ein induktiver Sensor. Er umfasst eine Erregerspule und zwei Messspulen, durch die sich der Plasmaschneidbrenner als Sensorkörper erstreckt. Darüber hinaus verfügt die thermische Bearbeitungsmaschine über eine Steuer-/Regel-Einheit 9. Die Steuer-/Regeleinheit weist ein Modul 7 zur Erfassung des Signals des Abstandssensors 4 auf. Darüber hinaus ist über die Steuer-/Regeleinheit 9 das Bearbeitungswerkzeug in x-, y- und z-Richtung relativ zum Werkstück verfahrbar. Um das Bearbeitungswerkzeug mit hoher Führungsgenauigkeit relativ zum Werkstück verfahren zu können, weist die Steuer-/Regel-Einheit 9 ferner eine CNC-Regelung 6 und eine Abstandsregelung 8 auf. Die CNC-Regelung 6 erlaubt eine Positionierung des Bearbeitungswerkzeugs im gesamten Maschinenraum. Die Abstandsregelung 8 funktioniert hingegen nur zuverlässig, wenn sich das Bearbeitungswerkzeug in der Nähe des zu bearbeitenden Werkstücks befindet, also in einem Abstand von höchstens 200 mm zur Werkstück-Oberfläche 5. Die CNC-Regelung 6 dient daher der Grobpositionierung, die Abstandsregelung 8 der Feinpositionierung des Bearbeitungswerkzeugs 3 relativ zum Werkstück 1.

### Einrichten der Bearbeitungsmaschine

Das Einrichten der Bearbeitungsmaschine 2 dient einerseits der Erfassung der räumlichen Lage der Werkstück-Oberfläche 5 und andererseits der Kalibrierung der Abstandsregelung 8, insbesondere des Abstandssensor-Signals. Es erfolgt bei ausgeschalteter Abstandsregelung 8.

### Erzeugen eines ersten Kontakts zwischen Bearbeitungswerkzeug und Werkstück

Zunächst wird vollautomatisiert ein Kontakt zwischen Bearbeitungswerkzeug 3 und Werkstück 1 erzeugt. Hierzu wird das Bearbeitungswerkzeug 3 mittels der CNC-Regelung 6 mit einer Geschwindigkeit *v* von 5 mm/s in einer Richtung möglichst senkrecht zur Werkstück-Oberfläche 5 auf das Werkstück 1 zubewegt. Das Bearbeitungswerkzeug 3 einerseits und das Werkstück 1 andererseits sind Teil eines offenen Stromkreises (in Figur 1 nicht dargestellt), der geschlossen wird, wenn das Bearbeitungswerkzeug 3 die Werkstück-Oberfläche 5 berührt. Ein Kontakt zwischen Bearbeitungswerkzeug 3 und Werkstück 1 wird daran erkannt, dass der Stromkreis geschlossen ist. **Figur 2** zeigt die thermische Bearbeitungsmaschine 2 aus Figur 1 im Zeitpunkt des erzeugten Kontakts zwischen Bearbeitungswerkzeug 3 und Werkstück 1. Der zu Detektion des Kontakts genutzte geschlossene Stromkreis ist durch den Pfeil 10 symbolisiert.

### Erfassen der räumlichen Lage eines Punkts auf der Werkstück-Oberfläche

Über die CNC-Regelung 6 wird im Zeitpunkt des Kontakts zwischen Bearbeitungswerkzeug 3 und Werkstück 1 die Position der Düsenspitze des Bearbeitungswerkzeugs 3 im Raum erfasst. Da dieser Punkt näherungsweise der räumlichen Lage eines Punkts auf der Werkstück-Oberfläche 5 entspricht, wird er als Nullpunkt des Bearbeitungsmaschinen-Koordinatensystems festgelegt.

Zudem werden zwei weitere Kontakte zwischen dem Bearbeitungswerkzeug 3 und dem Werkstück 1 erzeugt. Der erste Kontakt und die beiden weiteren Kontakte sind so gewählt, dass die Kontakte einen möglichst großen Abstand voneinander aufweisen. Vorzugsweise werden der erste Kontakt und die beiden weiteren Kontakte an drei verschiedenen Ecken einer rechteckförmigen Werkstück-Oberfläche erzeugt.

### Ermitteln einer Sicherheitsdistanz zum schnellen Positionieren

Die Sicherheitsdistanz zum schnellen Positionieren errechnet sich aus der Distanz der obersten Position der z-Achse zur Werkstückoberfläche abzüglich der Lochstechhöhe und abzüglich eines Sicherheitszuschlags von ca. 5 mm. Die Lochstechhöhe beträgt ca. 175% des Arbeitsabstands *h_{cut}.* Innerhalb der Sicherheitsdistanz zum schnellen Positionieren wird das Bearbeitungswerkzeug 3 von der CNC-Regelung 6 mit maximaler Geschwindigkeit von, je nach z-Achse mit bis zu 30 m/min bewegt.

### Positionieren des Bearbeitungswerkzeug in einem ersten und zweiten Abstand zur Werkstück-Oberfläche

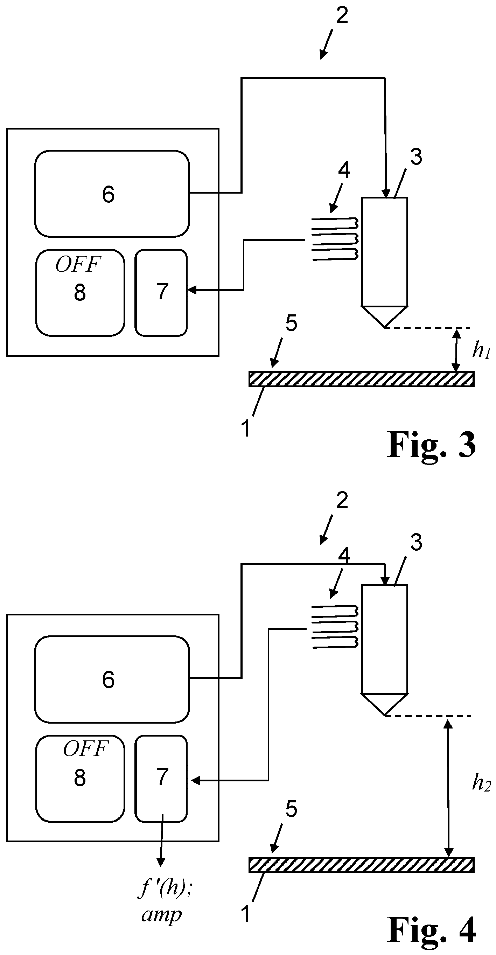

Anschließend wird das Bearbeitungswerkzeug 3 - wie in **Figur 3** schematisch gezeigt - auf einen ersten Abstand *h₁* zur Werkstück-Oberfläche 5 verfahren. Dort wird der dem ersten Abstand *h₁* zugehörige Signalwert des Abstandssensors 4 vom Modul 7 erfasst und gespeichert, bevor das Bearbeitungswerkzeug 3 - wie in **Figur 4** schematisch gezeigt - auf einen zweiten Abstand *h₂* zur Werkstück-Oberfläche 5 bewegt wird. Dabei wird der dem zweiten Abstand *h₂* zugehörige Signalwert des Abstandssensors 4 vom Modul 7 erfasst und gespeichert. Bei einer alternativen Ausgestaltung des Verfahrens (nicht dargestellt) entspricht der erste Abstand *h₁* dem bei der thermischen Bearbeitung des Werkstücks einzustellenden Arbeitsabstand *h_{cut}.* Der zugehörige Signalwert des Abstandssensors 4 wird als Führungs-Messwert für die Abstandsregelung 8 verwendet.

### Kalibrieren der Abstandsregelung

Modul 7 errechnet in einem ersten Schritt anhand der Messpunkte (*h₁*/Signalwert 1-Referenzwert) und (*h₂*/Signalwert 2-Referenzwert) eine Regressionsgerade und deren Steigung (entspricht bei einer Regressionsgeraden der Höhenableitung *f'(h)* des Abstandssensor-Signals) zur Kalibrierung der Abstandsregelung 8. Damit ist die Abstandsregelung zwar grundsätzlich kalibriert, allerdings muss der Messbereich des Abstandssensors nicht optimal genutzt sein. Daher ermittelt das Modul 7 in einem zweiten Schritt einen Verstärkungsfaktor *amp* für das Signal des Abstandssensors.

Die Berechnung des Verstärkungsfaktors *amp* sei an folgendem Beispiel verdeutlicht:
Es wird davon ausgegangen, dass das Messsignal des Abstandssensors 4 mit zunehmendem Abstand des Abstandssensors 4 von der Werkstückoberfläche 5 zunimmt. Hat der Abstandssensor beispielsweise einen Messbereich von +/- 10 V, muss der Messbereich so verschoben werden, dass der zu regelnde Abstand möglichst einem Sensorsignal entspricht, das im Bereich um 0 V liegt. Anhand des ersten und des zweiten Messwerts wird nun die Steigung des Abstandssensor-Signals ermittelt. Die Steigung ist ein Wert für die Agilität der Regelung auf Störgrößen, sprich Abweichung des Abstandes. Die Verstärkung ist so zu wählen, dass möglichst schnell auf Abweichungen reagiert werden kann, dennoch die Regelung im Normalbetrieb ruhig ist.

Bei Verwendung eines Verstärkungsfaktors *amp* ist dieser allerdings auch auf die Kalibrierung anzuwenden. Es muss folglich in einem dritten Schritt der Verstärkungsfaktor *amp* auch auf den ersten und den zweiten Signalwert angewendet werden, und die Kalibrierung der Abstandsregelung 8, insbesondere die Höhenableitung *f'(h)* des Abstandssensorsignals, zumindest rechnerisch korrigiert werden. Alternativ kann das Bearbeitungswerkzeug 3 aber auch erneut im ersten und zweiten Abstand zur Werkstück-Oberfläche 5 positioniert und die zugehörigen Messwerte unter Anwendung des Verstärkungsfaktors *amp* erneut erfasst werden.

### Ermitteln einer Sicherheitsdistanz zur Werkstück-Oberfläche

Die Sicherheitsdistanz wird anhand des gemäß Verfahrensschritt (aa) erzeugten Kontakts zwischen Bearbeitungswerkzeug 3 und Werkstück 1 und eines vorgegebenen Arbeitsabstands *h_{cut}* zur Werkstück-Oberfläche errechnet. Hierzu wird die erfasste räumliche Lage des Werkstücks 1 mit einem Sicherheitsabstand von 50 mm beaufschlagt und eine zur Werkstück-Oberfläche parallele Ebene errechnet, die den Bearbeitungsraum, in dem das Bearbeitungswerkzeug 3 verfahren werden kann in zwei Teilräume unterteilt, nämlich einen ersten dem Werkstück zugewandten Teilraum, in dem das Bearbeitungswerkzeug 3 zur Vermeidung von Kollisionen mit dem Werkstück 1 nur langsam verfahren werden kann und einen zweiten, dem Werkstück abgewandten Teilraum, in dem das Bearbeitungswerkzeug 3 mit maximaler Geschwindigkeit verfahrbar ist.

### Positionieren des Bearbeitungswerkzeugs im Arbeitsabstand und thermisches Bearbeiten des Werkstücks

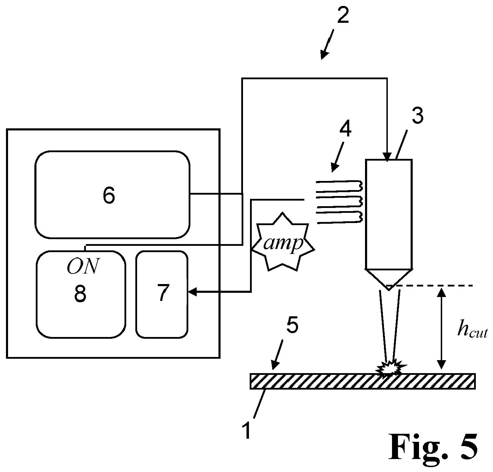

Schließlich wird das Bearbeitungswerkzeug 3 - wie in **Figur 5** schematisch gezeigt - in einem vorgegebenen Arbeitsabstand *h_{cut}* relativ zur Werkstück-Oberfläche 5 positioniert und die Abstandsregelung 8 eingeschaltet, um den Abstand des Bearbeitungswerkzeugs zur Werkstück-Oberfläche auf Arbeitsabstand *h_{cut}* zu halten. Als Regelgröße für die Abstandsregelung 8 dient das mit dem Verstärkungsfaktor amp multiplizierte Signal des Abstandssensors 4. Anschließend wird mit dem thermischen Bearbeiten des Werkstücks 1 begonnen.

Nach dem Schneiden einer ersten Schneidkontur wird eine zweite Schneidkontur in dasselbe Werkstück geschnitten. Im einfachsten Fall genügt für die mehrfache Bearbeitung desselben Werkstücks eine einmalige Einrichtung der Bearbeitungsmaschine. Der Grund hierfür ist, dass nach dem schnellen Positionieren des Bearbeitungswerkzeugs mit der Abstandsregel auf ein Signalwert geregelt wird, der einen Abstand zwischen Bearbeitungswerkzeug und Werkstück repräsentiert. Alternativ werden vor dem Schneiden der zweiten Schneidkontur die Verfahrensschritte (a) bis (b) wiederholt.

## Patentansprüche

1. Verfahren zur thermischen Bearbeitung eines Werkstücks (1) mit einer thermischen Bearbeitungsmaschine (2), die ein mittels einer CNC-Regelung (6) und zur Feinabstimmung mittels einer Abstandsregelung (8) relativ zum Werkstück (1) verfahrbares Bearbeitungswerkzeug (3) und einen mit dem Bearbeitungswerkzeug (3) verfahrbaren Abstandssensor (4) aufweist, **dadurch gekennzeichnet, dass** die folgenden Verfahrensschritte vollautomatisiert durchgeführt werden:
(a) Einrichten der Bearbeitungsmaschine (2) durch
(aa) Erzeugen eines Kontakts zwischen Bearbeitungswerkzeug (3) und Werkstück (1) und Erfassen der räumlichen Lage eines Punkts auf einer Werkstück-Oberfläche (5)
(bb) Positionieren des Bearbeitungswerkzeugs (3) in einem vorgegebenen ersten Abstand *h₁* zur Werkstück-Oberfläche (5) und Erfassen des zugehörigen Signalwerts des Abstandssensors (4) als ersten Messwert,
(cc) Positionieren des Bearbeitungswerkzeugs (3) in einem vorgegebenen zweiten Abstand *h₂* zur Werkstück-Oberfläche (5) und Erfassen des zugehörigen Signalwerts des Abstandssensors (4) als zweiten Messwert,
(dd) Kalibrieren der Abstandsregelung (8) umfassend das Bestimmen einer Höhenableitung des Abstandssensor-Signals und eines Verstärkungsfaktors *amp* für das Signal des Abstandssensors (4) unter Berücksichtigung des ersten Messwerts, des zweiten Messwerts, des ersten Abstands *h₁* und des zweiten Abstands *h₂*,
(b) Positionieren des Bearbeitungswerkzeugs (3) in einem vorgegebenen Arbeitsabstand *h_{cut}* zur Werkstück-Oberfläche (5) unter Einbeziehung des Verstärkungsfaktors *amp*, und
(c) thermisches Bearbeiten des Werkstücks (1).

2. Verfahren nach Anspruch 1, **dadurch gekennzeichnet, dass** das Einrichten der Bearbeitungsmaschine (2) gemäß Verfahrensschritt (a) das Positionieren des Bearbeitungswerkzeugs (3) im Arbeitsabstand *h_{cut}* zur Werkstück-Oberfläche (5) und das Erfassen des zugehörigen Signalwerts des Abstandssensors (4) als Führungs-Messwert für die Abstandsregelung (8) umfasst.

3. Verfahren nach Anspruch 2, **dadurch gekennzeichnet, dass** beim thermischen Bearbeiten des Werkstücks (1) gemäß Verfahrensschritt (c) der Abstand des Bearbeitungswerkzeugs (3) zur Werkstück-Oberfläche (5) mit der Abstandsregelung (8) auf Arbeitsabstand *h_{cut}* gehalten wird, wobei die Regelgröße das verstärkte Signal des Abstandssensors (4) ist.

4. Verfahren nach einem der vorhergehenden Ansprüche, **dadurch gekennzeichnet, dass** der beim Erzeugen des Kontakts zwischen Bearbeitungswerkzeug (3) und Werkstück (1) gemäß Verfahrensschritt (aa) erfasste Signalwert ein Referenzwert ist, der beim Kalibrieren der Abstandsregelung (8), insbesondere bei der Bestimmung des Verstärkungsfaktors *amp*, gemäß Verfahrensschritt (dd) berücksichtigt wird.

5. Verfahren nach einem der vorhergehenden Ansprüche, **dadurch gekennzeichnet, dass** anhand des gemäß Verfahrensschritt (aa) erzeugten Kontakts zwischen Bearbeitungswerkzeug (3) und Werkstück (1) und des vorgegebenen Arbeitsabstands *h_{cut}* zur Werkstück-Oberfläche (5) eine Sicherheitsdistanz zur Werkstück-Oberfläche (5) zum schnellen Positionieren des Bearbeitungswerkzeugs (3) ermittelt wird.

6. Verfahren nach einem der vorhergehenden Ansprüche, **dadurch gekennzeichnet, dass** zum Erfassen der räumlichen Lage der Werkstück-Oberfläche (5) gemäß Verfahrensschritt (aa) ein zweiter Kontakt zwischen Bearbeitungswerkzeug (3) und Werkstück (1) erzeugt und die räumliche Lage eines zweiten Punkts auf der Werkstück-Oberfläche (5) erfasst wird.

7. Verfahren nach einem der vorhergehenden Ansprüche, **dadurch gekennzeichnet, dass** zum Erfassen der räumlichen Lage der Werkstück-Oberfläche (5) gemäß Verfahrensschritt (aa) zwei weitere Kontakte zwischen Bearbeitungswerkzeug (3) und Werkstück (1) an voneinander beabstandeten Punkten auf der Werkstück-Oberfläche (5) erzeugt werden.

8. Verfahren nach einem der vorhergehenden Ansprüche, **dadurch gekennzeichnet, dass** der Abstandssensor die elektrische Kapazität zwischen einer Messelektrode des Abstandssensors (4) und dem Werkstück (1) erfasst, oder der Abstandssensor (4) den Abstand zwischen Werkstück (1) und Bearbeitungswerkzeug (3) mit einem optischen Verfahren erfasst.

9. Verfahren nach einem der vorhergehenden Ansprüche, **dadurch gekennzeichnet, dass** der Kontakt zwischen Bearbeitungswerkzeug (3) und Werkstück (1) am Feedback eines Antriebsverstärkers oder durch einen mechanischen Aushebelschalter erkannt wird oder dass der Kontakt zwischen Bearbeitungswerkzeug (3) und Werkstück (1) mit Hilfe des Sensorsignals und einer Default-Parametrierung eines Regelkreises zur Einstellung des Arbeitsabstands erkannt wird.

10. Verfahren nach einem der vorhergehenden Ansprüche, **dadurch gekennzeichnet, dass** das Positionieren des Bearbeitungswerkzeugs (3) gemäß Verfahrensschritt (bb) und/oder (cc) anhand eines Bearbeitungsmaschinen-Koordinatensystems erfolgt, dessen Nullpunkt ein beim Erzeugen des Kontakts zwischen Bearbeitungswerkzeug (3) und Werkstück (1) gemäß Verfahrensschritt (aa) erzeugter Kontaktpunkt ist.

11. Verfahren nach einem der vorhergehenden Ansprüche, **dadurch gekennzeichnet, dass** das thermische Bearbeiten des Werkstücks (1) eine erste thermische Bearbeitung und eine von der ersten Bearbeitung unabhängige zweite thermische Bearbeitung desselben Werkstücks (1) umfasst, und dass die Verfahrensschritte (a) bis (b) vor der ersten thermischen Bearbeitung und vor der zweiten thermischen Bearbeitung durchgeführt werden.

12. Verfahren nach einem der vorhergehenden Ansprüche, **dadurch gekennzeichnet, dass** als Bearbeitungswerkzeug (3) ein Plasmabrenner eingesetzt wird, der einen ferromagnetischen Brennerkopf und mindestens ein am Brennerkopf fixiertes, ferromagnetisches Schneid- oder Schweißwerkzeug aufweist, und dass der Abstandssensor (4) eine Erregerspule zur Erzeugung eines Magnetfelds und zwei Messspulen umfasst, wobei sich die Messspulen und die Erregerspule um den Brennerkopf und das Schneid- und Schweißwerkzeug erstrecken, und dass anhand der relativen Lage zwischen den Phasen der von den Messspulen erfassten Messsignale der Abstand des Plasmabrenners zur Werkstück-Oberfläche (5) bestimmt wird.

13. Verfahren nach einem der vorhergehenden Ansprüche 1 bis 12, **dadurch gekennzeichnet, dass** als Bearbeitungswerkzeug (3) ein Plasmabrenner und als Abstandssensor (4) ein kapazitiver Sensor oder ein optischer Sensor oder ein induktiver Sensor eingesetzt werden.

14. Verfahren nach einem der vorhergehenden Ansprüche 1 bis 12, **dadurch gekennzeichnet, dass** als Bearbeitungswerkzeug (3) ein Laserschneidkopf und als Abstandssensor (4) ein kapazitiver Sensor oder ein optischer Sensor oder ein induktiver Sensor eingesetzt werden.

15. Verfahren nach einem der vorhergehenden Ansprüche, **dadurch gekennzeichnet, dass** zum Erzeugen des Kontakts zwischen Bearbeitungswerkzeug (3) und Werkstück (1) gemäß Verfahrensschritt (aa) das Bearbeitungswerkzeug (3) mit einer Geschwindigkeit v im Bereich von 0,3 m/min bis 30 m/min in Richtung des Werkstücks (1) bewegt wird.
